# FASCICULE DE BREVET EUROPEEN

(11) **EP 0 284 513 B1**
(45) Date de publication et mention de la délivrance du brevet: **01.06.1994**
(21) Numéro de dépôt: 88400719.6
(22) Date de dépôt: 24.03.1988
(51) Int. Cl.: G01N 21/75, G01N 21/64

(54) **Capteur chimique actif, à fibres optiques**
Faseroptischer aktiver Sensor
Active chemical sensor using optical fibres

(30) Priorité: 27.03.1987 FR 8704299
(43) Date de publication de la demande: 28.09.1988
(73) Titulaire: COMMISSARIAT A L'ENERGIE ATOMIQUE, 75015 Paris Cédex 15 (FR)
(72) Inventeur: Boisde, Gilbert, F-91440 Bures Sur Yvette (FR); Perez, Jean-Jacques, F-92320 Chatillon (FR)
(74) Mandataire: Dubois-Chabert, Guy

(56) Documents cités:
- EP-A- 0 072 627
- US-A- 4 295 470
- US-A- 4 577 109
- ANALYTICAL CHEMISTRY, vol. 56, no. 1, janvier 1984, pages 16A-34A; W.R. SEITZ: "Chemical sensors based on fiber optics"
- ADVANCES IN INSTRUMENTATION, vol. 40, Part I, 1985, pages 305-317, ISA, Research Triangle Park, NC, US; T. HIRSCHFELD: "Remote and in-situ analysis"

## Description

La présente invention concerne un capteur chimique actif, à fibres optiques. Elle trouve notamment des applications dans le domaine de la médecine, de la biochimie ou de l'industrie agro-alimentaire, pour les mesures de concentration d'espèces chimiques dans des milieux fluides, en particulier pour les mesures de pH de solutions liquides, ou pour les mesures de pressions partielles de gaz tels que l'oxygène ou le gaz carbonique dans des solutions gazeuses, ou encore pour les mesures d'indice optique de milieux fluides (c'est-à-dire liquides ou gazeux).

Le capteur de l'invention encore appelé "optode", appartient à la catégorie des capteurs dits "actifs" qui s'opposent aux capteurs dits "passifs", ces derniers comportant simplement une ou plusieurs fibres optiques, utilisées en tant que guides de lumière et éventuellement associées à une optique, en vue de mesurer une certaine caractéristique d'un milieu fluide.

Les capteurs actifs comprennent en outre un réactif approprié qui, au contact du milieu fluide à étudier, interagit avec une lumière issue de la fibre (ou de l'une des fibres). L'étude de la lumière résultant de cette interaction permet d'aboutir au résultat de la mesure.

Le réactif peut être une substance dont la couleur varie sous l'effet de la caractéristique étudiée du milieu considéré et l'on peut observer cette variation de coloration en absorption ou en fluorescence (renforcement ou extinction de fluorescence, suivant la réaction chimique réactif-milieu utilisée).

On connait déjà des capteurs optiques actifs, à fibres optiques, notamment par les brevets US-A-4,200,110, EP-A-0073558 et EP-A-0126600. Les capteurs décrits dans ces documents sont destinés à l'étude de solutions liquides et comprennent au moins deux fibres optiques en regard desquelles est placé un réactif approprié à la mesure à effectuer sur une solution liquide donnée, ce réactif étant immobilisé ou fixé sur des particules de polystyrène par exemple. L'ensemble constitué par le réactif et ces particules est contenu dans un volume délimité par une membrane de confinement qui est perméable aux ions contenus dans la solution liquide à étudier.

Les capteurs optiques connus par les brevets cités plus haut présentent l'inconvénient de nécessiter une membrane. Celle-ci est gênante lorsqu'il est nécessaire de stériliser le capteur, étant donné qu'elle est généralement constituée d'un matériau organique résistant mal à des températures égales ou supérieures à 125°C. En outre, elle limite la vitesse d' interaction entre le réactif et le milieu étudié.

La présente invention a pour but de remédier à cet inconvénient en proposant un capteur optique actif, à fibres optiques, qui n'utilise aucune membrane.

On connaît déjà, par US-A-4577109 un capteur optique comportant une fibre optique associée à une matière poreuse contenue dans un tube également poreux, dont l'extrémité est percée d'une ouverture par laquelle la matière est en contact avec le milieu étudié. C'est à travers le tube poreux que se font les échanges entre la matière poreuse et ledit milieu.

On connaît aussi, par EP-A-0072627, un capteur chimique actif qui comporte deux fibres alignées et un élément sensible collé entre ces fibres. Cet élément est constitué par un morceau de fibre optique dont la gaine a été rendue poreuse et munie d'un réactif.

De façon précise, la présente invention a pour objet un capteur optique actif à fibres optiques, destiné à la mesure d'une caractéristique donnée d'un milieu fluide, ce capteur comprenant au moins un ensemble comportant :
- un réactif approprié à ladite mesure et prévu pour interagir avec le milieu fluide,
- des moyens de support du réactif,
- une fibre optique appelée fibre émettrice, prévue pour envoyer de la lumière en direction des moyens de support, et
- au moins une autre fibre optique appelée fibre réceptrice, prévue pour récupérer au moins une partie d'une lumière de rétrodiffusion, de réflectance ou de fluorescence issue des moyens de support lorsque ceux-ci reçoivent la lumière provenant de la fibre émettrice,
le capteur étant caractérisé en ce que les moyens de support comprennent un élément unique, totalement poreux et adsorbant, sur lequel est fixé le réactif et qui est placé en regard de la fibre émettrice et de chaque fibre réceptrice, cet élément étant prévu pour être en contact direct, par laquasi-totalité de sa surface externe, avec le milieu fluide lorsque le capteur y est plongé, ledit élément étant donc dépourvu de membrane de confinement.

Le fait de ne pas utiliser de membrane dans le capteur optique objet de l'invention, permet de stériliser le capteur un grand nombre de fois et donc de réutiliser ce capteur, ce qui est important notamment dans le domaine de l'industrie agro-alimentaire. En outre, l'absence de membrane ainsi que d'ailleurs le fait d'avoir un contact quasi-total entre l'élément poreux et adsorbant et le milieu fluide permettent d'avoir une vitesse importante de réaction entre le réactif et le milieu étudié.

Par ailleurs, dans les capteurs connus, il peut être nécessaire d'utiliser des membranes ne laissant passer que les ions d'un type particulier. Dans la présente invention, lorsque le problème se pose, il suffit de choisir un réactif très spécifique de tels ions.

On notera également que dans la présente invention, on utilise un seul élément poreux et adsorbant en regard des fibres. Ceci présente des avantages par rapport aux capteurs connus qui utilisent, en tant que moyens de support d'un réactif, de nombreuses micro-sphères faites par exemple de copolymères de styrène et de divinylbenzène. De tels moyens de support présentent l'inconvénient d'être très diffusants pour la lumière et donc de constituer un mauvais système optique pour des mesures de transmission ou de réflexion optique. L'énergie lumineuse récupérée est alors très faible, ce qui nécessite l'emploi de sources lumineuses d'excitation intenses et de photo-détecteurs très sensibles, tels que les photo-multiplicateurs ou les diodes à avalanche. L'emploi d'un seul élément poreux et adsorbant dans la présente invention, permet de remédier à cet inconvénient.

Selon un mode de réalisation particulier du capteur objet de l'invention, chaque ensemble comprend plusieurs fibres optiques réceptrices qui sont disposées parallèlement à la fibre optique émettrice correspondante et d'un même côté que celle-ci par rapport à l'élément de l'ensemble, et qui sont réparties (de préférence régulièrement) autour de la fibre optique émettrice.

Une telle disposition des fibres optiques réceptrices autour de la fibre optique émettrice permet de recueillir une quantité importante de lumière diffuse ou de lumière d'excitation de fluorescence (suivant le type de capteur réalisé), ce qui n'est pas le cas des capteurs connus qui utilisent un faisceau de fibres optiques, dans lequel des fibres optiques émettrices et des fibres optiques réceptrices sont réparties au hasard.

Avec un tel mode de réalisation particulier, il est alors possible de réaliser un capteur conforme à l'invention, comprenant un montage "en parallèle" de tels ensembles, c'est-à-dire un capteur comprenant plusieurs ensembles qui sont placés côte à côte et rendus solidaires les uns des autres.

Dans une réalisation avantageuse de l'invention, correspondant audit montage "en parallèle", chaque élément est au moins en partie transparent et le capteur comprend en outre des moyens optiquement réflecteurs placés de l'autre côté de chaque élément et prévus pour réfléchir une partie de la lumière issue des moyens de support en direction des fibres optiques réceptrices par l'intermédiaire de ces moyens de support.

Les fibres optiques réceptrices peuvent ainsi collecter une plus grande quantité de lumière.

Selon un autre mode de réalisation particulier du capteur objet de l'invention, chaque élément est au moins en partie transparent et chaque ensemble comprend une fibre optique émettrice et une fibre optique réceptrice qui sont disposées de part et d'autre de l'élément.

On peut alors réaliser un premier capteur conforme à l'invention, correspondant à cet autre mode de réalisation particulier, ce premier capteur comprenant au moins deux ensembles placés en série et connectés par une fibre optique de liaison qui relie la fibre réceptrice d'un ensemble à la fibre émettrice de l'ensemble adjacent. Dans une réalisation particulière, cette fibre réceptrice et cette fibre émettrice peuvent être une seule et même fibre constituant la fibre de liaison.

On peut également réaliser un second capteur conforme à l'invention, correspondant également à cet autre mode de réalisation particulier, ce second capteur comprenant au moins deux ensembles placés en série de telle manière que le capteur soit d'un seul tenant, deux ensembles adjacents ayant une fibre optique en commun qui joue le rôle de fibre réceptrice pour l'un et de fibre émettrice pour l'autre.

Dans la présente invention, lorsqu'on utilise plusieurs desdits ensembles, les réactifs qui leur sont respectivement associés peuvent être différents les uns des autres.

Ceci permet d'élargir la gamme de mesure, par exemple la gamme de mesure de pH pour un capteur prévu pour effectuer des mesures de pH. Des réactifs différents n'ont pas la même réponse spectrale en fonction de la caractéristique considérée d'un milieu à étudier, par exemple en fonction du pH d'un liquide. Dans le cas de mesures de pH et de l'utilisation de deux réactifs différents, ces deux réactifs peuvent être respectivement la fluorescéine et le bleu de bromophénol. On peut ainsi faire des mesures de pH à des longueurs d'ondes différentes.

Dans une réalisation particulière de la présente invention, chaque élément a une forme approximativement sphérique ou ovoïde.

Dans ce cas, chaque ensemble peut comprendre une gaine rigide dans laquelle sont fixés l'élément, la fibre émettrice et chaque fibre réceptrice et qui est pourvue d'au moins une ouverture en regard de chaque élément.

En tant qu'élément de forme me approximativement sphérique, on peut avantageusement choisir une bille de silice poreuse (de taille bien entendu compatible avec celle des fibres optiques utilisées). Une telle bille permet des stérilisations répétées du capteur considéré, en choisissant bien entendu les autres éléments du capteur et notamment les fibres optiques, de façon à supporter de telles stérilisations répétées.

Comme on l'a déjà indiqué, le capteur objet de l'invention peut être destiné à la mesure de pH, chaque réactif étant alors un réactif colorimétrique.

Dans le cas de telles mesures de pH, le réactif est avantageusement le bleu de thymol. En effet, ce dernier est aussi bien utilisable avec une solution très acide (correspondant par exemple à des pH compris entre 0,5 et 3,5), solution qui fait virer le bleu de thymol du jaune au rouge, qu'avec une solution très basique (correspondant par exemple à des pH compris entre 10 et 13), solution qui fait virer le bleu de thymol du jaune au bleu.

Enfin, dans une réalisation particulière de l'invention, le capteur comprenant trois ensembles, ces ensembles comportent respectivement, en tant que réactifs, de la fluorescéine, du bleu de thymol, et du bleu de bromophénol (ou du rouge de phénol), qui sont ainsi associés dans le même capteur, ce qui permet d'effectuer des mesures de pH sur un domaine étendu de pH.

La présente invention sera mieux comprise à la lecture de la description qui suit en référence aux dessins annexés, sur lesquels :
- la figure 1 est une vue schématique d'un mode de réalisation particulier du capteur objet de l'invention,
- la figure 2 est une vue schématique d'un assemblage "en parallèle" de plusieurs capteurs conformes à l'invention,
- la figure 3 est une vue schématique d'un assemblage "en série" de capteurs conformes à l'invention, et
- la figure 4 est une vue schématique d'un autre assemblage "en série" de capteurs conforme à l'invention.

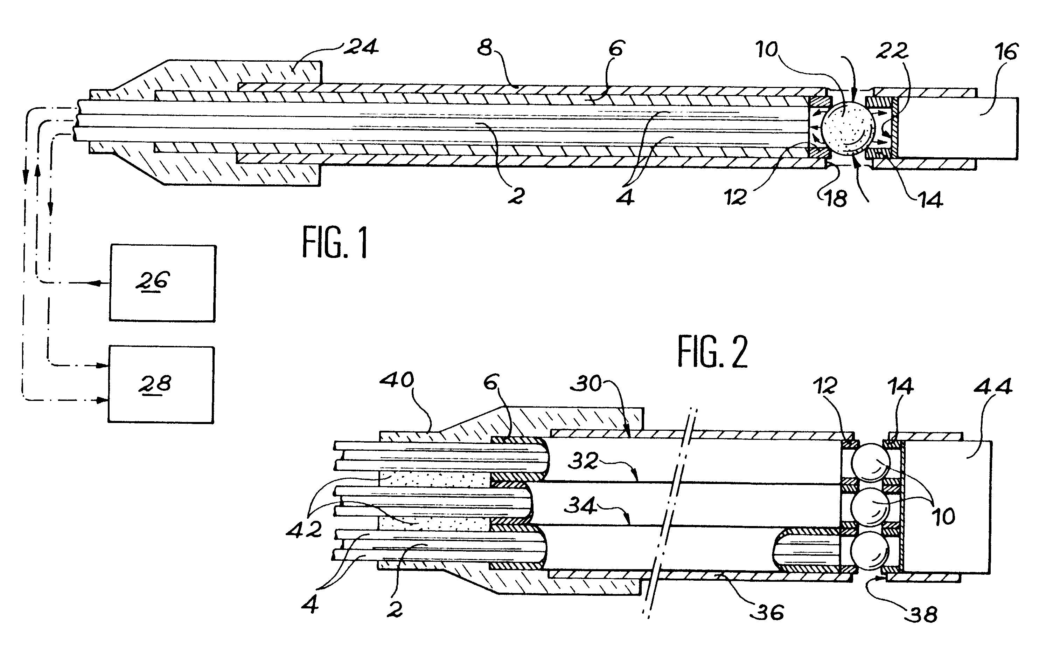

Les capteurs représentés sur les figures 1 à 4 sont destinés à effectuer des mesures de pH dans des solutions liquides, c'est-à-dire des mesures de concentrations en ions H⁺ de ces solutions, les réactifs étant des indicateurs colorés, immobilisés sur des supports poreux chimiquement inertes de type Amberlite (marque déposée) par exemple.

On effectue par exemple des mesures d'absorption optique, les indicateurs colorés utilisés ayant une absorption optique qui varie en fonction du pH de la solution étudiée.

Les capteurs représentés sur les figures 1 à 4 peuvent être utilisés pour effectuer des mesures de concentration d'autres espèces chimiques que les ions H⁺, à condition de choisir des réactifs appropriés à ces mesures. De même, au lieu d'effectuer des mesures d'absorption optique, on peut effectuer des mesures de fluorescence ou de spectrométrie Raman par exemple. A titre purement indicatif et nullement limitatif, pour effectuer des mesures de concentration en fer d'une solution liquide, on peut utiliser un support poreux inerte imprégné de soufre, et pour effectuer des mesures de fluorescence, il suffit d'imprégner un support poreux inerte d'un indicateur fluorescent.

Sur la figure 1, on a représenté schématiquement un capteur conforme à l'invention. Ce capteur comprend une fibre optique dite "émettrice" 2 et plusieurs fibres optiques dites "réceptrices" 4 qui sont réparties autour de la fibre 2. Les fibres 2 et 4, de préférence en silice, ont des axes parallèles, sont placées les unes contre les autres et ont chacune une extrémité plane et perpendiculaire auxdits axes, ces extrémités planes étant dans un même plan. Pour des questions de miniaturisation, il est possible de priver les fibres 2 et 4 de leur gaine protectrice généralement en matière plastique, sur toute la longueur de ces fibres qui se trouve dans le capteur. On peut utiliser par exemple six fibres réceptrices disposées suivant une configuration hexagonale autour de la fibre émettrice 2.

Le capteur comprend également un tube 6 par exemple en acier inoxydable dans lequel sont placées les fibres 2 et 4 ainsi qu'une gaine cylindrique 8, par exemple en acier inoxydable, à l'intérieur de laquelle est placé le tube 6.

Le capteur comprend aussi une bille (unique) 10, placée en regard desdites extrémités planes, par exemple faite d'un copolymère et munie d'un réactif approprié aux mesures de pH, tel qu'un indicateur coloré, lié par covalence au copolymère. Ce dernier est avantageusement du type polystyrène, par exemple Amberlite (marque déposée) XAD 2 ou XAD 4, du type styrène-divinylbenzène ou du type polyacrylamide. On peut également utiliser une bille de silice poreuse et y greffer le réactif par silanisation (avec du méthyloxypropyltriméthoxysilane). L'utilisation d'une bille en silice permet une stérilisation du capteur à haute température. Bien entendu, il faut prévoir les autres composants du capteur à cet effet. Notamment, lorsque les fibres ne sont pas privées de gaine, on choisit par exemple des fibres à gaine en polyimide.

Bien entendu, le diamètre de la bille 10 est choisi en fonction du diamètre des fibres optiques.

On peut utiliser une fibre émettrice et six fibres réceptrices en silice, munies de leur gaine de protection, par exemple en polyimide, le diamètre extérieur de cette gaine de protection étant de 320 micromètres, le diamètre du coeur des fibres étant de 200 micromètres, le diamètre de la gaine optique de ces fibres étant de 280 micromètres, et l'on choisit une bille de 200 à 600 micromètres de diamètre .

Une première entretoise tubulaire 12 par exemple en acier inoxydable, dont le diamètre intérieur et le diamètre extérieur sont respectivement égaux au diamètre intérieur et au diamètre extérieur du tube 6, est fixée par un côté à ce dernier, dans la gaine 8. La bille 10 est placée contre l'autre côté de la première entretoise 12 et une séconde entretoise tubulaire 14 identique à la première 12 est également placée dans la gaine 8, à l'opposé de cette première entretoise 12 et contre la bille 10. Les contacts de la bille 10 avec les entretoises 12 et 14 sont non étanches.

Le capteur représenté sur la figure 1 comprend également une pièce cylindrique pleine 16 par exemple en acier inoxydable,dont le diamètre est très légèrement inférieur au diamètre intérieur de la gaine 8. La pièce 16 pénètre dans la gaine 8 du côté de l'entretoise 14 et lui est fixée, la bille 10 étant prise et immobilisée entre les deux entretoises 12 et 14. Lorsque la bille est en place entre les deux entretoises, une liaison capable de supporter des stérilisations répétées, est réalisée entre la gaine 8 et la pièce 16 par sertissage de la pièce 16 dans la gaine 8 ou collage de l'une à l'autre au moyen d'une colle époxy haute température par exemple. De même, les entretoises 12 et 14 peuvent être respectivement fixées au tube 6 et à la pièce 16 par sertissage ou collage au moyen d'une telle colle époxy haute température.

La gaine 8 est en outre pourvue au niveau de la bille 10, de fenêtres 18 prévues pour que cette bille 10 soit au contact direct de la solution à étudier lorsque le capteur y est plongé.

En fait, lorsque l'extrémité du capteur correspondant à la bille est plongée dans un milieu fluide, toute la surface externe de la bille est en contact avec ce milieu fluide, sauf pour quelques points de cette surface externe qui sont en contact avec les entretoises, d'où un contact quasi-total de la surface externe de la bille avec le milieu fluide considéré.

La face 22 de la pièce 16 est avantageusement rendue réflectrice, par exemple par polissage, de façon à pouvoir renvoyer une lumière lui parvenant de la bille en direction de celle-ci.

La longueur du tube 6 est choisie de façon que ce tube dépasse de l'autre extrémité de la gaine 8. En cette autre extrémité, le capteur comprend un élément de maintien ou gaine 24 qui est prévu pour emprisonner ladite autre extrémité de la gaine 8, l'extrémité correspondante du tube 6 qui en dépasse ainsi qu'une portion des fibres 2 et 4 qui sortent de cette extrémité du tube 6.

Pour réaliser le capteur représenté sur la figure 1, on peut commencer par mettre en place les fibres 2 et 4, dans le tube 6 muni de l'entretoise 12, la bille 10 (en tenant le tout verticalement), la gaine 8, la gaine 24 et enfin la pièce 16 munie de l'entretoise 14.

Le capteur représenté sur la figure 1 est utilisé de la façon suivante : l'extrémité de ce capteur correspondant à la bille 10 est plongée dans la solution liquide dont on veut déterminer le pH. Une lumière appropriée, issue d'une source lumineuse 26, est injectée dans la fibre émettrice 2 par l'autre extrémité de celle-ci. Cette lumière atteint La bille 10 dont le réactif a réagi avec la solution liquide et absorbe une certaine quantité de lumière.

En outre, une partie de la lumière est réfléchie par la bille 10 et repasse dans les fibres réceptrices 4. Une autre partie de la lumière traverse la bille 10 (qui est poreuse et imbibée de solution liquide) atteint la face 22 de la pièce 16, se réfléchit sur celle-ci, retraverse la bille 10 et, focalisée par cette dernière, passe également dans les fibres réceptrices 4. La lumière ainsi transmise par ces fibres 4 est analysée à l'autre extrémité de celles-ci au moyen d'un photodétecteur approprié 28.

L'intensité de la lumière qui parvient au photodétecteur 28 et qui a la même longueur d'onde que la lumière issue de la source 26 dépend précisément du pH de la solution étudiée. On peut alors déterminer le pH de la solution considérée à l'aide de ladite intensité et d'étalonnages préalables et appropriés du capteur représenté sur la figure 1.

Le capteur représenté sur la figure 1 est de conception simple et peut être réalisé de façon peu coûteuse.

Le fait de pouvoir utiliser dans ce capteur des fibres optiques privées de leur gaine protectrice, permet de miniaturiser ledit capteur (et de réaliser un capteur de l'ordre de 1 à 2 mm de diamètre).

Concernant l'utilisation du capteur représenté sur la figure 1, on ajoutera qu'afin de s'affranchir du bruit de fond de l'ensemble de la chaîne de mesure, il est préférable d'effectuer des mesures à deux longueurs d'onde différentes selon les principes enseignés dans le brevet FR-A-2 317 638. Par exemple, dans le cas de l'utilisation du bleu de thymol en tant que réactif, on peut effectuer des mesures d'absorbance à 555 et 700 nm. Une mesure à une longueur d'onde supplémentaire (selon les principes enseignés dans le brevet FR-A-2 474 166) permet de s'affranchir de la force ionique du milieu étudié.

Sur la figure 2, on a représenté schématiquement un assemblage "en parallèle" de plusieurs capteurs conformes à l'invention. L'assemblage comprend par exemple trois capteurs 30, 32, 34, chaque capteur comprenant les éléments référencés 2, 4, 6, 10, 12 et 14 décrits en référence à la figure 1. L'agencement relatif des divers éléments en question des capteurs 30, 32 et 34 est identique à celui des éléments 2, 4, 6, 10, 12 et 14 du capteur représenté sur la figure 1.

Les capteurs 30, 32 et 34 sont identiques les uns aux autres, parallèles, chaque capteur étant tangent aux deux autres. Ce dernier point n'apparaît pas sur la figure 2 sur laquelle, pour plus de clarté, les capteurs 30, 32 et 34 sont représentés superposés.

L'assemblage représenté sur la figure 2 comprend en outre une gaine tubulaire 36 en acier inoxydable qui emprisonne les capteurs 30, 32 et 34. Cette gaine est pourvue de fenêtres 38 laissant apparaître chaque bille 10 de sorte que ces billes sont directement en contact avec le liquide à étudier lorsque l'assemblage de la figure 2 y est plongé.

Cet assemblage comprend également un élément de maintien 40 qui emprisonne une extrémité de la gaine 36 la plus éloignée des billes 10, les extrémités correspondantes des tubes 6, ces extrémités des tubes 6 dépassant de l'extrémité considérée de la gaine 36, et une portion des groupes de fibres 2, 4 qui sortent desdites extrémités des tubes 6. On notera que l'élément 40 est l'homologue de l'élément 24 de la figure 1. Une matière de remplissage 42, par exemple une colle époxy haute température, est placée à l'intérieur de l'élément 40, entre les différents groupes de fibres 2, 4 qui sortent desdites extrémités des tubes 6.

L'assemblage représenté sur la figure 2 comprend aussi une pièce cylindrique en acier inoxydable 44 prévue pour boucher l'extrémité de la gaine 36 la plus proche des billes 10 et pour plaquer de façon non étanche par l'intermédiaire des entretoises 14 qui lui sont fixées, les billes 10 contre les entretoises 12 qui sont elles-mêmes fixées aux extrémités correspondantes des tubes 6. La pièce 44 peut être collée à la gaine 36 ou sertie dans cette dernière. Cette pièce 44 (qui est l'homologue de la pièce 16 représentée sur la figure 1) peut être pourvue d'une face optiquement réflectrice en regard des billes 10.

Etant donné une solution liquide à analyser, l'assemblage représenté sur la figure 2 y est plongé, des lumières appropriées sont respectivement envoyées dans les fibres 2 et les lumières respectivement récupérées par les différents groupes de fibres 4 sont analysées pour effectuer les mesures de pH souhaitées.

Pour effectuer ces mesures, les billes 10 peuvent être munies de réactifs différents (par exemple la fluorescéine, le bleu de thymol et le bleu de bromophénol).

Bien entendu, l'assemblage représenté sur la figure 2 peut comprendre plus de trois capteurs 30, 32, 34 et par exemple sept capteurs du genre des capteurs 30, 32, 34, parallèles et agencés suivant une configuration hexagonale, (six capteurs étant associés aux sommets d'un hexagone et un septième capteur étant associé au centre de cet hexagone).

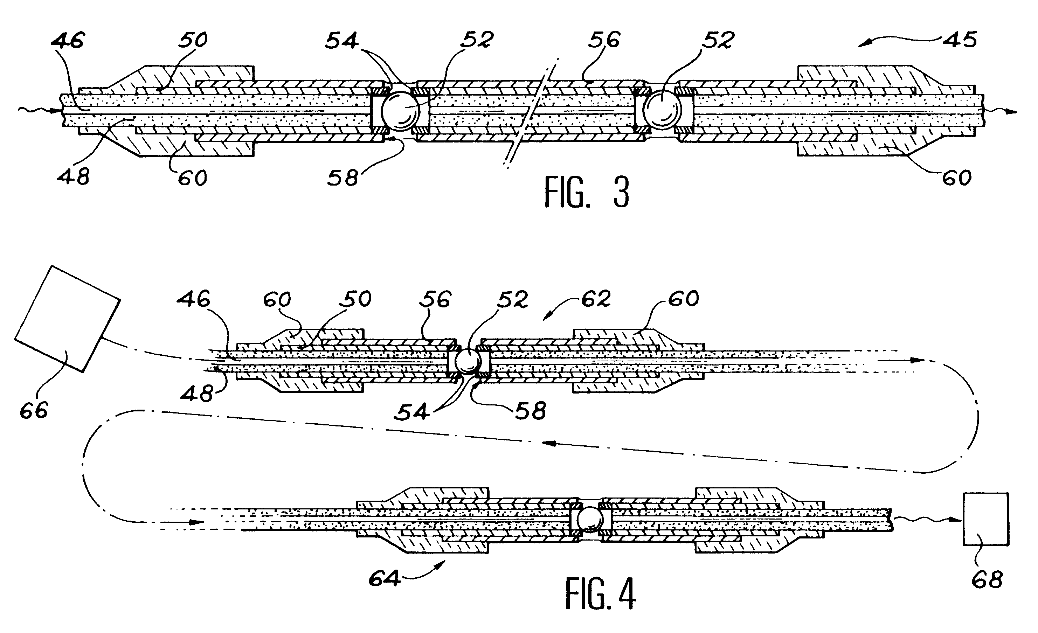

Sur la figure 3, on a représenté schématiquement un assemblage "en série" de capteurs conformes à l'invention. Cet assemblage, référencé 45, comprend une fibre optique 46 de préférence en silice, pourvue d'une gaine protectrice en matière plastique 48, ainsi qu'un tube en acier inoxydable 50 qui emprisonne la fibre. Le tube et la fibre sont interrompus en plusieurs endroits, par exemple deux endroits. Chaque surface libre de fibre et de tube correspondant à ces interruptions est dans un même plan perpendiculaire à l'axe commun de la fibre et du tube. Des billes 52 du genre de la bille 10 de la figure 1 sont placées en chacune des interruptions. Chaque bille est prise (de façon non étanche) entre deux entretoises en acier inoxydable 54 qui ont le même diamètre intérieur et le même diamètre extérieur que le tube 50 et qui sont respectivement fixées aux surfaces libres de ce tube correspondant à l'interruption considérée.

L'assemblage représenté sur la figure 3 comprend également une gaine tubulaire 56 en acier inoxydable qui emprisonne le tube 50 et qui est pourvue de fenêtres 58 disposées au niveau des billes 52 et prévues pour permettre un contact direct entre un liquide à étudier et les billes lorsque l'assemblage représenté sur la figure 3 est plongé dans ce liquide.

Cet assemblage comprend en outre deux éléments de maintien 60 qui emprisonnent les extrémités de la gaine 56, les extrémités correspondantes du tube 50, qui dépassent desdites extrémités de la gaine 56, et des portions de la fibre 46 sortant respectivement des extrémités du tube 50.

Les billes 52 peuvent être munies de réactifs différents et lorsque l'assemblage est plongé dans la solution liquide dans laquelle on souhaite effectuer des mesures de pH, en injectant une lumière appropriée à l'extrémité de la fibre 46, cette lumière parcourt la fibre en traversant successivement les différentes billes et en interagissant avec le réactif placé sur chacune de celles-ci, de sorte qu'à l'autre extrémité de la fibre 46, on peut effectuer une analyse en longueur d'onde de la lumière récupérée (par exemple au moyen d'un monochromateur et d'un photodétecteur non représentés) et connaître le pH de la solution au voisinage de chacune des billes.

L'assemblage représenté sur la figure 3 peut être obtenu en réalisant d'abord lesdites interruptions sur la fibre, en mettant ensuite en place l'un des deux éléments de maintien 60, puis la portion correspondante de tube 50 munie de l'entretoise qui lui est associée, puis la bille 52 correspondante (la portion de tube 50 étant tenue verticalement), la gaine 56, le tronçon de tube 50 résultant des deux interruptions, muni de la portion de fibre qui lui correspond et des deux entretoises fixées en ses extrémités, l'autre bille 52 et enfin, en mettant en place l'autre élément 60 sur la portion restante de fibre ainsi que sur la portion correspondante de tube muni de son entretoise et en enfonçant dans l'extrémité correspondante de la gaine 56 cette portion de tube jusqu'à ce que l'autre élément 60 vienne emprisonner la gaine 56.

Bien entendu, on pourrait réaliser un assemblage comprenant plus de deux interruptions de fibre et donc plus d'un tronçon central de fibre.

Sur la figure 4, on a représenté schématiquement un autre assemblage "en série" de capteurs conformes à l'invention. Cet autre assemblage comprend, comme l'assemblage représenté sur la figure 3, une fibre optique 46 munie d'une gaine protectrice 48, cette fibre étant interrompue par exemple en deux endroits. A chaque interruption est associé un capteur conforme à l'invention. On a ainsi deux capteurs référencés 62 et 64. Ces deux capteurs sont identiques excepté que les réactifs qui leur sont associés peuvent être différents.

Chaque capteur 62 ou 64 est en outre structurellement identique à l'assemblage qui est représenté sur la figure 3 dans lequel l'une des deux billes et le "tronçon central" de cet assemblage auraient été enlevés; en d'autres termes, chaque capteur 62 ou 64 comprend en allant d'une extrémité à l'autre de celui-ci, un élément 60, une portion de tube 50 contenant une partie de la fibre, qui joue le rôle de fibre émettrice, une entretoise 54, une bille 52, une autre entretoise 54, une autre portion de tube 50 et un autre élément 60, ainsi qu'une gaine 56 prise dans les deux éléments 60 et entourant les deux portions de tube 50, la gaine étant munie de fenêtres 58 au niveau de la bille 52 pour permettre un contact direct de la bille et de la solution liquide à étudier lorsque l'assemblage y est plongé. L'autre portion de tube 50 contient une partie de la fibre, qui joue le rôle de fibre réceptrice, la fibre réceptrice du capteur 62 se prolongeant en dehors de celui-ci et pénétrant dans le capteur 64 pour constituer la fibre émettrice de celui-ci.

Comme pour l'assemblage représenté sur la figure 3, la mesure de pH est effectuée en plongeant l'assemblage de la figure 4 dans la solution liquide à étudier, en injectant à une extrémité de la fibre 46 (du côté du capteur 62) une lumière appropriée issue d'une source lumineuse 66, et en étudiant la lumière récupérée à l'autre extrémité de la fibre 46 (du côté du capteur 64) grâce à des moyens de photodétection appropriés 68 comprenant par exemple un monochromateur (non représenté).

La longueur de fibre optique comprise entre les deux capteurs 62 et 64 peut être importante. Elle peut valoir par exemple une cinquantaine de mètres, voire plus.

En outre, on peut bien entendu réaliser un assemblage comprenant plus de deux capteurs du type des capteurs 62 et 64, en série.

Dans les assemblages représentés sur les figures 2, 3 et 4, on peut utiliser des réactifs différents deux à deux ayant des spectres spécifiques différenciables, les moyens de mesure utilisés respectivement avec ces différents assemblages étant choisis de façon à avoir une dynamique d'échelle suffisante. A titre purement indicatif et nullement limitatif, pour un assemblage "en série" de deux capteurs, on peut utiliser un colorant apte à virer du jaune au rouge et un autre colorant apte à virer du jaune au bleu, en milieu acide.

Les assemblages de capteurs "en série" sont avantageux, car ils permettent d'accroître la zone de pH mesurable. En effet, chacun des colorants utilisables est généralement sensible sur 2,5 unités pH. Une multiplicité de capteurs montés en série permet ainsi d'obtenir une dynamique en pH importante pour l'assemblage obtenu.

## Revendications

1. Capteur chimique actif à fibres optiques, destiné à la mesure d'une caractéristique donnée d'un milieu fluide, ce capteur comprenant au moins un ensemble comportant :
- un réactif approprié à ladite mesure et prévu pour interagir avec le milieu fluide,
- des moyens de support (10, 52) du réactif ,
- une fibre optique (2, 46) appelée fibre émettrice, prévue pour envoyer de la lumière en direction des moyens de support (10, 52), et
- au moins une autre fibre optique (4) appelée fibre réceptrice, prévue pour récupérer au moins une partie d'une lumière issue des moyens de support (10, 52) lorsque ceux-ci reçoivent la lumière provenant de la fibre émettrice (2, 46),
le capteur étant caractérisé en ce que les moyens de support comprennent un élément unique, totalement poreux et adsorbant (10, 52), sur lequel est fixé le réactif et qui est placé en regard de la fibre émettrice (2, 46) et de chaque fibre réceptrice (4), cet élément (10, 52) étant en contact direct, par la quasi-totalité de sa surface externe, avec le milieu fluide lorsque le capteur y est plongé, ledit élément (10, 52) étant dépourvu de membrane de confinement.

2. Capteur selon la revendication 1, caractérisé en ce que chaque ensemble comprend plusieurs fibres optiques réceptrices (4) qui sont disposées parallèlement à la fibre optique émettrice (2) correspondante et d'un même côté que celle-ci par rapport à l'élément (10) de l'ensemble, et qui sont réparties autour de la fibre optique émettrice (2).

3. Capteur selon la revendication 2, caractérisé en ce qu'il comprend plusieurs ensembles (30, 32, 34) qui sont placés côte à côte et rendus solidaires les uns des autres.

4. Capteur selon l'une quelconque des revendications 2 et 3, caractérisé en ce que chaque élément (10, 52) est au moins en partie transparent et en ce que le capteur comprend en outre des moyens optiquement réflecteurs (16, 44) placés de l'autre côté de chaque élément (10, 52) et prévus pour réfléchir une partie de la lumière issue des moyens de support en direction des fibres optiques réceptrices (4) par l'intermédiaire de ces moyens de support.

5. Capteur selon la revendication 1, caractéfisé en ce que chaque élément (52) est au moins en partie transparent et en ce que chaque ensemble comprend une fibre optique émettrice (46) et une fibre optique réceptrice (4) qui sont disposées de part et d'autre de l'élément (52).

6. Capteur selon la revendication 5, caractérisé en ce qu'il comprend au moins deux ensembles (62, 64) placés en série et connectés par une fibre optique de liaison qui relie la fibre réceptrice d'un ensemble à la fibre émettrice de l'ensemble adjacent.

7. Capteur selon la revendication 5, caracté-risé en ce qu'il comprend au moins deux ensembles placés en série de telle manière que le capteur (45) soit d'un seul tenant, deux ensembles adjacents ayant une fibre optique en commun qui joue le rôle de fibre réceptrice pour l'un et de fibre émettrice pour l'autre.

8. Capteur selon l'une quelconque des revendications 3, 6 et 7, caractérisé en ce que les réactifs respectivement associés aux ensembles sont différents les uns des autres.

9. Capteur selon l'une quelconque des revendications 1 à 8, caractérisé en ce que chaque élément (10, 52) a une forme sphérique ou ovoïde.

10. Capteur selon la revendication 9, caractérisé en ce que chaque ensemble comprend une gaine rigide (8, 36, 56) dans laquelle sont fixés l'élément (10, 52), la fibre émettrice (2, 46) et chaque fibre réceptrice (4) et qui est pourvue d'au moins une ouverture (18, 38) en regard de chaque élément.

11. Capteur selon l'une quelconque des revendications 9 et 10, caractérisé en ce que chaque élément (10, 52) est une bille de résine synthétique.

12. Capteur selon l'une quelconque des revendications 9 et 10, caractérisé en ce que chaque élément (10, 52) est une bille de silice poreuse.

13. Capteur selon l'une quelconque des revendications 1 à 12, caractérisé en ce qu'il est destiné à la mesure de pH et en ce que chaque réactif est un réactif colorimétrique.

14. Capteur selon la revendication 13, caractérisé en ce que ledit réactif est le bleu de Thymol.

15. Capteur selon les revendications 8 et 13, caractérisé en ce qu'il comprend trois ensembles comportant respectivement, en tant que réactifs, de la fluorescéine, du bleu de thymol, et du bleu de bromophénol ou du rouge de phénol.

## Claims

1. Active chemical transducer with optical fibres for measuring a given characteristics of a fluid medium, said transducer having at least one assembly with a reagent appropriate for said measurement and intended to interact with the fluid medium, means (10, 52) for supporting the reagent, an optical fibre (2, 46), called the emitting fibre and used for transmitting light in the direction of the support means (10, 52) and at least one other optical fibre (4), called the receiving fibre, which recovers at least part of the light from the support means (10, 52), when the latter receive the light from the emitting fibre (2,46), the transducer being characterized in that the support means have a single, completely porous and adsorbing element (10, 52), to which is fixed the reagent and which is positioned facing the emitting fibre (2, 46) and each receiving fibre (4), said element (10, 52) being in direct contact, by the quasi-totality of its outer surface, with the fluid medium when the transducer is immersed in the latter, so that the element (10, 52) has no confinement membrane.

2. Transducer according to claim 1, characterized in that each assembly comprises several receiving optical fibres (4), which are arranged parallel to the corresponding emitting optical fibre (2) and on the same side thereof with respect to the element (10) of the assembly and which are distributed around the emitting optical fibre (2).

3. Transducer according to claim 2, characterized in that it comprises several assemblies (30, 32, 34), which are juxtaposed and rendered integral with one another.

4. Transducer according to any one of the claims 2 and 3, characterized in that each element (10, 52) is at least partly transparent and in that the transducer also comprises optically reflecting means (16, 44) placed on the other side of each element (10,52) and which reflect part of the light from the support means in the direction of the receiving optical fibres (4) via said support means.

5. Transducer according to claim 1, characterized in that each element (52) is at least partly transparent and in that each assembly comprises an emitting optical fibre (46) and a receiving optical fibre arranged on either side of said element (52).

6. Transducer according to claim 5, characterized in that it comprises at least two assemblies (62, 64) arranged in series and connected by an optical connecting fibre, which connects the receiving fibre of one assembly to the emitting fibre of the adjacent assembly.

7. Transducer according to claim 5, characterized in that it comprises at least two assemblies arranged in series in such a way that the transducer (45) is continuous, two adjacent assemblies having a common optical fibre serving as the receiving fibre for one and the emitting fibre for the other.

8. Transducer according to any one of the claims 3, 6 and 7, characterized in that the reagents respectively associated with the assemblies differ from one another.

9. Transducer according to any one of the claims 1 to 8, characterized in that each element (10, 52) has a spherical or ovoid shape.

10. Transducer according to claim 9, characterized in that each assembly comprises a rigid sheath (8, 36, 56), in which are fixed the element (10, 52), the emitting fibre (2, 46) and each receiving fibre (4) and which is provided with at least one opening (18, 38) facing each element.

11. Transducer according to either of the claims 9 and 10, characterized in that each element (10, 52) is a synthetic resin ball.

12. Transducer according to either of the claims 9 and 10, characterized in that each element (10, 52) is a porous silica ball.

13. Transducer according to any one of the claims 1 to 12, characterized in that it is intended for measuring the pH-value and in that each reagent is a colorimetric reagent.

14. Transducer according to claim 13, characterized in that said reagent is thymol blue.

15. Transducer according to claims 8 and 13, characterized in that it comprises three assemblies respectively having as reagents fluorescein, thymol blue and bromophenol blue or phenol red.

## Patentansprüche

1. Faseroptischer aktiver chemischer Sensor, dazu bestimmt, ein gegebenes Kennzeichen eines flüssigen Milieus zu messen, dieser Sensor umfaßt mindestens eine Einheit, die:
- ein geeignetes Reagens für die besagte Messung umfaßt und vorgesehen ist, mit dem flüssigen Milieu zu reagieren,
- Trägermittel (10, 52) für das Reagens umfaßt,
- eine optische Faser (2, 46), genannt Sendefaser, umfaßt, die vorgesehen ist, um in Richtung der Trägermittel (10, 52) Licht auszusenden, und
- mindestens eine andere optische Faser (4), genannt Empfängerfaser, umfaßt, die vorgesehen ist, um mindestens einen Teil des Lichts zurückzugewinnen, das von den Trägermitteln (10, 52) ausgesendet wird, wenn diese Licht empfangen, das von der Sendefaser (2, 46) stammt,
der Sensor ist dadurch gekennzeichnet, daß die Trägermittel ein einzelnes, vollständig poröses und adsorbierendes Element (10, 52) umfassen, auf dem das Reagens befestigt ist und das gegenüber der Sendefaser (2, 46) und jeder Empfängerfaser (4) angeordnet ist, dieses Element (10, 52) steht mit fast der Gesamtheit seiner äußeren Oberfläche mit dem flüssigen Milieu in direktem Kontakt, wenn der Sensor darin eingetaucht ist, wobei das besagte Element (10, 52) frei ist von einer einschließenden Membran.

2. Sensor gemäß Anspruch 1, dadurch gekennzeichnet, daß jede Einheit mehrere optische Empfängerfasern (4) umfaßt, die parallel zu der entsprechenden optischen Senderfaser (2) und auf derselben Seite wie diese gegenüber dem Element (10) der Einheit angeordnet sind, und die rund um die optische Sendefaser (2) verteilt sind.

3. Sensor gemäß Anspruch 2, dadurch gekennzeichnet, daß er mehrere Einheiten (30, 32, 34) umfaßt, die nebeneinander angeordnet sind und untereinander gegenseitig haftend gehalten werden.

4. Sensor gemäß einem der Ansprüche 2 und 3, dadurch gekennzeichnet, daß jedes Element (10, 52) zumindest teilweise durchlässig ist und daß der Sensor außerdem optisch reflektierende Mittel (16, 44) umfaßt, die auf der anderen Seite jedes Elements (10, 52) angeordnet sind und vorgesehen sind, um einen Teil des Lichts zu reflektieren, das von den Trägermitteln in Richtung der optischen Empfängerfasern (4) durch Zwischenschaltung dieser Trägermittel ausgesendet wird.

5. Sensor gemäß Anspruch 1, dadurch gekennzeichnet, daß jedes Element (52) mindestens teilweise durchlässig ist und daß jede Einheit eine optische Sendefaser (46) und eine optische Empfängerfaser (48) umfaßt, die beiderseits des Elements (52) angeordnet sind.

6. Sensor gemäß Anspruch 5, dadurch gekennzeichnet, daß er mindestens zwei Einheiten (62, 64) umfaßt, die in Serie angeordnet sind und durch eine optische Verbindungsfaser verbunden sind, die die Empfängerfaser einer Einheit mit der Sendefaser der angrenzenden Einheit verbindet.

7. Sensor gemäß Anspruch 5, dadurch gekennzeichnet, daß er mindestens zwei Einheiten umfaßt, die so in Serie angeordnet sind, daß der Sensor (45) aus einem Stück sei, wobei zwei angrenzende Einheiten eine gemeinsame optische Faser haben, welche für die eine die Rolle der Empfängerfaser und für die andere die der Sendefaser spielt.

8. Sensor gemäß einem der Ansprüche 3, 6 und 7, dadurch gekennzeichnet, daß die entsprechend mit den Einheiten verbundenen Reagenzien voneinander verschieden sind.

9. Sensor gemäß einem der Ansprüche 1 bis 8, dadurch gekennzeichnet, daß jedes Element (10, 52) eine kugel- oder eiförmige Form hat.

10. Sensor gemäß Anspruch 9, dadurch gekennzeichnet, daß jede Einheit eine starre Hülle (8, 36, 56) umfaßt, in welcher das Element (10, 52), die Sendefaser (2, 46) und jede Empfängerfaser (4) befestigt sind und die mit mindestens einer Öffnung (18, 38) gegenüber jedem Element versehen ist.

11. Sensor gemäß einem der Ansprüche 9 und 10, dadurch gekennzeichnet, daß jedes Element (10, 52) eine synthetische Harzkugel ist.

12. Sensor gemäß einem der Ansprüche 9 und 10, dadurch gekennzeichnet, daß jedes Element (10, 52) eine poröse Siliziumkugel ist.

13. Sensor gemäß einem der Ansprüche 1 bis 12, dadurch gekennzeichnet, daß er zur Messung des pH-Werts bestimmt ist und daß jedes Reagens ein kolorimetrisches Reagens ist.

14. Sensor gemäß Anspruch 13, dadurch gekennzeichnet, daß das besagte Reagens Thymolblau ist.

15. Sensor gemäß den Ansprüchen 8 und 13, dadurch gekennzeichnet, daß er drei Einheiten umfaßt, die entsprechend als Reagenzien Uranin, Thymolblau und Bromphenolblau oder Phenolrot umfassen.
